# EUROPÄISCHE PATENTSCHRIFT

(11) **EP 1 090 550 B1**
(45) Veröffentlichungstag und Bekanntmachung des Hinweises auf die Patenterteilung: **02.06.2004**
(21) Anmeldenummer: 00121072.3
(22) Anmeldetag: 28.09.2000
(51) Int. Cl.: A01K 91/047, D04B 3/02

(54) **Vorrichtung zur Herstellung von Schleifenknoten, insbesondere unter Verwendung monofiler Angelschnüre**
Device to make a loop in a monofilament fishingline
Dispositif pour former une boucle en particulier dans un fil de pêche monofilament

(30) Priorität: 08.10.1999 DE 29917789 U
(43) Veröffentlichungstag der Anmeldung: 11.04.2001
(73) Patentinhaber: Manz, Heinrich, 77855 Achern (DE)
(72) Erfinder: Manz, Heinrich, 77855 Achern (DE)
(74) Vertreter: Thoma, Friedrich, Dipl.-Ing.(FH)

(56) Entgegenhaltungen:
- DE-C- 874 941
- US-A- 3 625 556
- US-A- 3 678 712
- US-A- 5 197 217

## Beschreibung

Die Erfindung betrifft eine Vorrichtung zum manuellen Herstellen von Schlaufenknoten, insbesondere unter Verwendung monofiler Angelschnüre.

Zur Herstellung einer tragkräftigen Schlaufe an monofilen bzw. einfädigen Angelschnüren sind sogenannte Schlaufenknoten erforderlich, die eine hohe Traglastzahl aufweisen sollten. Dabei muß sichergestellt sein, daß derartige Schlaufenknoten zweckmäßig, rationell und manuell einfach, insbesondere am jeweiligen Angelplatz, herstellbar sind.

Aus der EP 0 082 126 A1 ist ein Gerät zum Verschlingen von Fäden bzw. Schnüren für die Fischerei bekannt. Dort werden mittels eines Gerätefingers, einer Führung und eines, mit dem Gerätefinger gekoppelten Hakens, die Fäden maschinell gesteuert, zu einem Knoten verschlungen.

Dieses Gerät ist relativ aufwendig im Aufbau und äußerst umständlich bedienbar, sodaß es für einen Einsatz unmittelbar im Gelände d.h. an einer Angelstelle recht ungeeignet ist. Außerdem ist dieses Gerät relativ teuer in der Anschaffung.

Im übrigen ist ein Schlaufenknoten bekannt und erfolgreich im Angelsport im Einsatz. Dieser Schlaufenknoten wird manuell mit den Fingern geknüpft, indem zunächst das Ende der Angelschnur doppelt genommen und diese Doppelschnur nochmals doppelt gefaltet, sodaß zwei Schlaufen vorliegen. Die zuletzt gebildete Schlaufe wird um einen Finger oder einen Bleistift gelegt und um zwei volle Umdrehungen gedreht. Nun wird die zuerst gebildete Schlaufe durch die zweite Schlaufe gezogen aus der zuvor der Finger oder der Bleistift herausgezogen worden sind. Danach wird der Knoten unter der Beachtung zugezogen, daß alle Windungen im Knoten gleichmäßig zugezogen werden.

Diese manuelle Knotenherstellung ist äußerst umständlich handhabbar, insbesondere wenn die Angelschnur relativ dünn ist.

Der Erfindung liegt die Aufgabe zugrunde, die Nachteile dieser bekannten Geräte zu vermeiden und eine einfache und handliche Vorrichtung zum übersichtlichen und leichten Herstellung eines Schlaufenknotens unter Verwendung einer monofilen Angelschnur zu schaffen, die nicht nur einfach und zweckmäßig bedienbar ist, sondern mittels der es auch möglich ist, relativ kleine und in gleichmäßiger Größe, Schlaufen einfach und übersichtlich verknotet herzustellen.

Diese Aufgabe wird mit den Merkmalen im kennzeichnenden Teil des Patentanspruchs 1 gelöst und in den Unteransprüchen sind weitere vorteilhafte Einzelheiten beansprucht.

Vorteilhaft bei der neuen stabförmigen Vorrichtung ist nicht nur die dort einseitig bzw. vorderseitig vorgesehene, insbesondere in einem relativ spitzen Winkel verlaufende, hakenförmig ausgebildete Abkröpfung mit einem zweckmäßigerweise ovalen hochgestellten Querschnitt, einerseits zum Einhängen der zu einer Doppelschlaufe gefalteten Fäden und andererseits zum Verdrehen und Verknüpfen der Fäden miteinander, sondern auch die dort an der Abkröpfung endseitig vorgesehene, zur Abkröpfungsinnenseite hin verlaufende, einseitig offene, schlitzförmige Hakenöse zum einfachen und sicheren manuellen Einhängen der aus der Bildung der Doppelschlaufe erhaltenen Einfachschlaufe und zum Verschlingen der beiden Fäden miteinander zu einem Knoten, indem die Vorrichtung manuell aus der zuerst gebildeten Doppelschlaufe herausgezogen wird, derart, daß dabei die Doppelschlaufe über die Einfachschlaufe gezogen wird.

Vorteilhaft ist ferner die zweckmäßige Ausgestaltung der der Abkröpfung gegenüberliegenden Endseite der Vorrichtung, die zweckmäßigerweise im endseitigen Bereich einen runden Querschnitt aufweist, der im mittleren Bereich in einen griffig gestalteten axialverlaufenden Oberflächenbereich übergeht. Zwischen diesen beiden Bereichen ist die Vorrichtung mit einer wulstförmigen Querschnittsverdickung ausgestattet zur zweckmäßigen handlichen axial begrenzenden Führung der Vorrichtung während der Handhabung.

Ein Ausführungs- und Anwendungsbeispiel der neuen Vorrichtung ist in den Zeichnungen dargestellt und wird im folgenden näher erläutert. Es zeigen
- Fig. 1: eine schaubildliche Ansicht der Vorrichtung mit einer glatten axialverlaufenden handlichen Mantelfläche,
- Fig. 2: eine schaubildlich vergrößerte Teilansicht der einseitigen, vorderseitig vorgesehenen Abkröpfung der Vorrichtung,
- Fig. 3: eine Querschnittsansicht der vorderseitigen Abkröpfung der Fig. 2 im Bereich der dort vorgesehenen Hakenöse,
- Fig. 4: eine schaubildliche Ansicht der Vorrichtung mit einer teilweise handlich axial verlaufenden griffigen Körpermantelfläche,
- Fig. 5: eine schaubildliche Ansicht einer zweckmäßigen Handhabung der Vorrichtung,
- Fig. 6: eine schaubildliche Ansicht eines losen Schlaufenknotens,
- Fig. 7: eine schaubildliche Ansicht eines kraftschlüssig geknüpften Schlaufenknotens nach Fig. 6,
- Fig. 8: eine schaubildliche Ansicht des ersten Handhabungsschritts zur Herstellung eines Schlaufenknotens,
- Fig. 9: eine schaubildliche Ansicht des zweiten Handhabungsschritts zur Herstellung eines Schlaufenknotens,
- Fig. 10: eine schaubildliche Ansicht des dritten Handhabungsschritts zur Herstellung eines Schlaufenknotens,
- Fig. 11: eine schaubildliche Ansicht des vierten und letzten Handhabungsschritts zur Herstellung eines Schlaufenknotens,
- Fig. 12: eine schaubildliche Ansicht der manuellen Herstellung relativ kleiner und zueinander gleich großer Schlaufen an fertigen Knoten,
- Fig. 13: eine schaubildliche Ansicht einer Hilfsvorrichtung zum Binden eines Schlaufenknotens in der Ausgangsphase,
- Fig. 14: eine schaubildliche Ansicht des Bindens eines Schlaufenknotens in der Herstellungsphase 'zwei volle Umdrehungen des Doppelfadens' und
- Fig. 15: eine schaubildliche Ansicht des Bindens eines Schlaufenknotens in der Herstellungsphase 'Endschlaufe durch die Erstschlaufe stecken'.

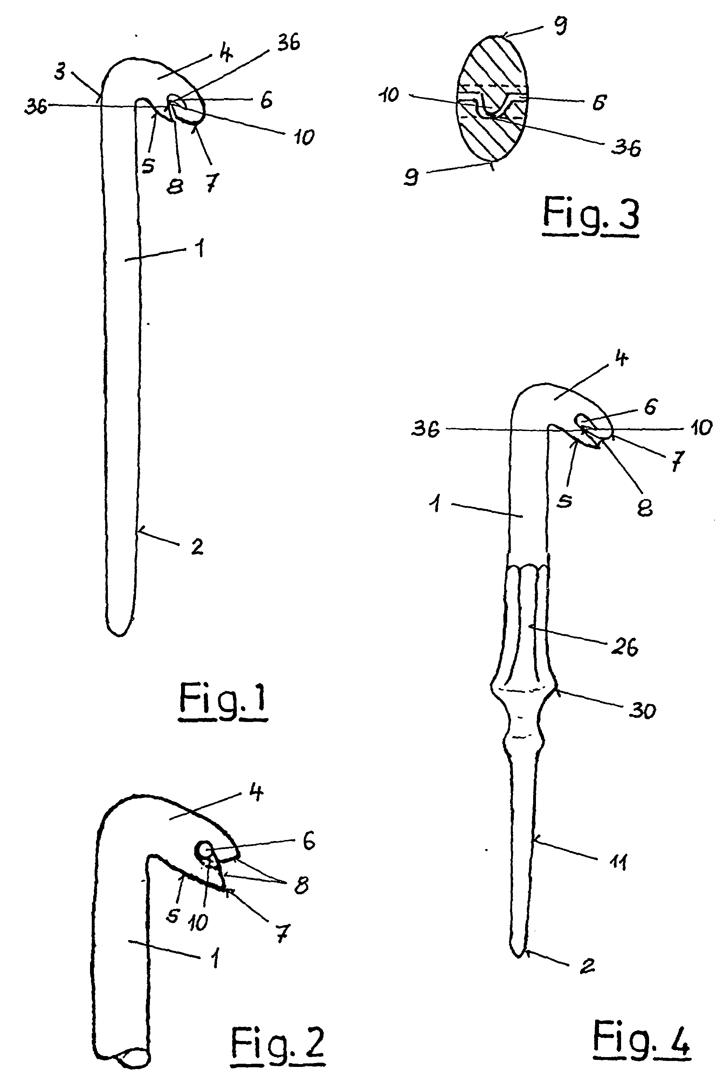

Die in den Fig. 1 bis 3 dargestellte Vorrichtung zeigt im einzelnen einen stabförmigen handlichen und axialverlaufend oberflächenglatten Körper 1, der zur Rückseite 2 hin leicht konisch verjüngend verläuft und der zweckmäßigerweise einen zylinderförmigen Querschnitt aufweist. An seiner Vorderseite 3 ist der Körper 1 neuerungsgemäß mit einer in einem relativ spitzen Winkel verlaufenden, d.h. zum Körper 1 hin gerichteten, insbesondere einstückig angeordneten, hakenförmig ausgebildeten Abkröpfung 4 versehen. Endseitig ist die Abkröpfung 4 mit einer längs verlaufenden, einseitig offenen, schlitzförmigen Hakenöse 6 versehen, die zur Stirnseite 7 hin, mit einem, insbesondere symmetrischen spitzbis rechtwinkelig ausgebildeten, Hakenösen-Schnabel 8 versehen ist.

Im Bereich der Hakenöse 6 weist die Abkröpfung 4 einen hochkantovalen Querschnitt auf, derart, daß die beiden spiegelbildlich einander eng gegenüberliegenden im Ovalradius kleineren Seiten 9 symmetrisch zur Hakenöse 6 stehen, wie dies aus der Fig. 3 ersichtlich wird.

Wie die Fig. 1 bis 3 desweiteren zeigen, ist die Hakenöse 6 zur Abkröpfungsinnenseite hin schlitzförmig offen und mit einem, zum Körper 1 hin weisenden, einseitig angeordneten zungenförmigen Haken 10 versehen. Der Haken 10 ist zweckmäßigerweise federelastisch ausgebildet und seitensymmetrisch angeordnet. Der Haken 10 liegt dabei federelastisch auf der Innenseite 36 des Hakenösen-Schnabels 8 auf.

Es liegt im Rahmen der Erfindung, daß, wie die Fig. 4 zeigt, der Körper 1 der Vorrichtung im stabförmigen Bereich mit einem griffigen, insbesondere axial verlaufenden vielflächigen, Oberflächenbereich 26 ausgestattet ist, der einseitig, zur Rückseite 2 hin, mit einer koaxialen, wulstförmigen Körpermantel-Ausbildung 30 versehen ist, die zur Rückseite 2 hin in eine axial verlaufende, sich zur Rückseite 2 hin im Außendurchmesser verjüngende stabförmige Führung 11 mündet.

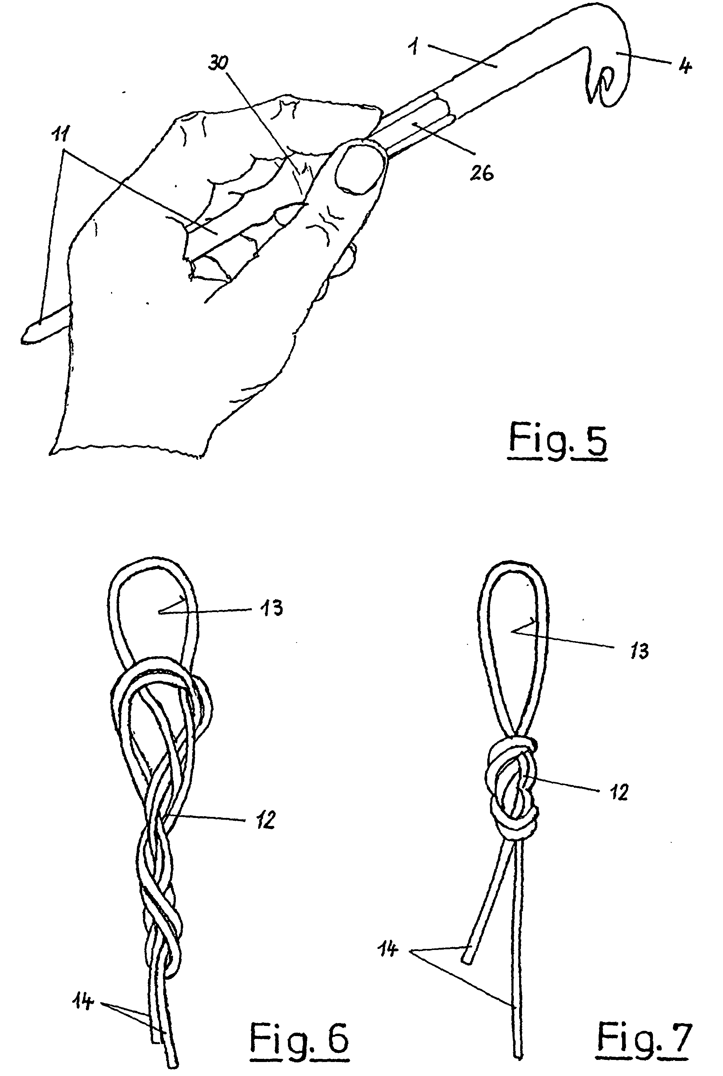

Diese Führung 11 gewährleistet zusammen mit der wulstförmigen Ausbildung 30 eine zweckmäßige Handhabung bzw. Bedienungsführung der neuen Vorrichtung, wie dies die Fig. 5 anschaulich vermittelt. Der Körper 1 bzw. die gesamte neue Vorrichtung ist zweckmäßigerweise einstückig aus einem Kunststoff gefertigt. Dabei liegt es im Rahmen der Neuerung, daß der Körper 1 und die Abkröpfung 4 aus zueinander unterschiedlichen Werkstoffen hergestellt und kraftschlüssig nichtlösbar oder lösbar miteinander verbunden sind.

Die Fig. 6 zeigt einen lose geknüpften zweckmäßigen Schlaufenknoten 12 mit der gewünschten einseitigen Schlaufe 13 und dem zweifach verschlungenen Doppel-Faden 14, insbesondere eine monofile Angelschnur.

Die Fig. 7 zeigt den Schlaufenknoten 12 nach Fig. 6 in kraftschlüssig geknüpftem Zustand. 13 bezeichnet die gewünschte Schlaufe und 14 kennzeichnet den Faden bzw. die Angelschnur.

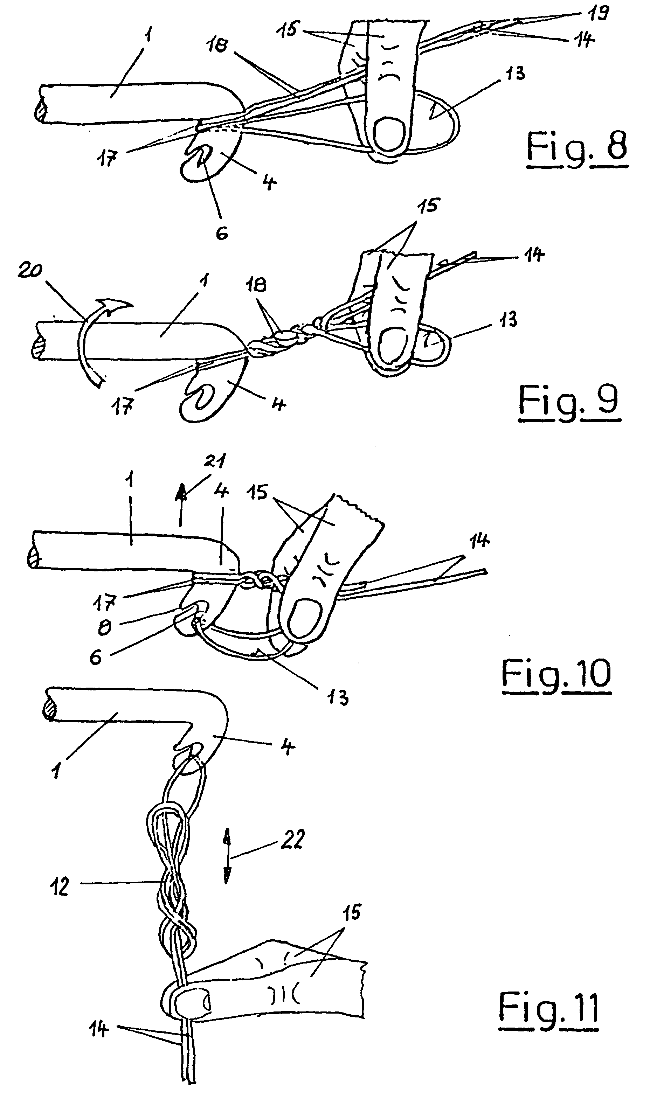

Aus den Fig. 8 bis 11 ist anschaulich ersichtlich, wie mittels der neuen Vorrichtung ein Schlaufenknoten 12 nach den Fig. 6 und 7 am jeweiligen Ort des Gebrauchs einfach, rationell und zweckmäßig handlich hergestellt werden kann.

Wie die Fig. 8 zeigt, wird zunächst die gewünschte Schlaufe 13 aus dem Falten eines Fadens 14 manuell geschlungen und im zweiten Schritt, unter manuellem Festhalten der Schlaufe 13 zwischen zwei Fingern 15 eine Doppelschlaufe 17 gelegt. Dabei ist zu beachten, daß der Doppel-Faden 18 eine ausreichende rückseitige Länge 19 aufweist.

Die Doppelschlaufe 17 wird in einem nächsten Schritt hinter der Abkröpfung 4 am stabförmigen Körper 1 der Vorrichtung eingehängt.

Nach dem Einhängen der Doppelschlaufe 17 hinter die Abkröpfung 4, wird, unter weiterem manuellem Festhalten der Schlaufe 13 und des Doppelfadens 18, gemäß der Fig. 8, der Körper 1 in Pfeilrichtung 20 manuell um zwei volle Umdrehungen gedreht, wie dies die Fig. 9 anschaulich zeigt.

Nach dem Drehen des Körpers 1 um zwei Umdrehungen, gemäß Fig. 9, wird in einem weiteren Schritt die Schlaufe 13 in den Schnabel 8 der Hakenöse 6 eingehängt, wobei der Doppel-Faden 18 und die Schlaufe 13 weiterhin manuell zwischen den Fingern 15 gehalten wird, wie dies die Fig. 10 zeigt.

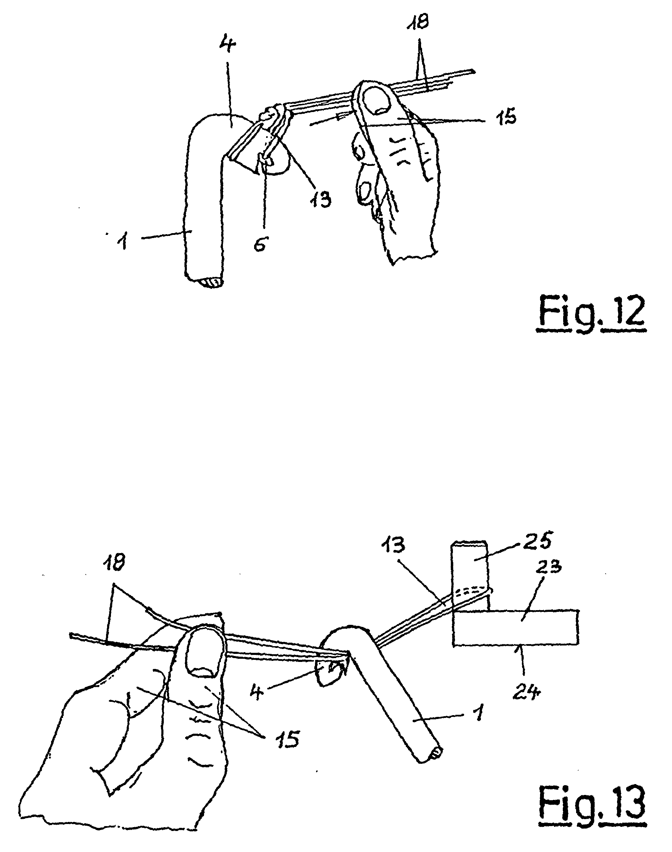

In einem weiteren Schritt wird, wie aus der Fig. 11 ersichtlich ist, die Abkröpfung 4 manuell, in Pfeilrichtung 21, aus der Doppelschlaufe 17 gezogen, wobei die Schlaufe 13 weiterhin in der Hakenöse 6 eingehängt verbleibt. Die Finger 15 halten dabei den Doppel-Faden 18 auf der dem Schlaufenknoten 12 gegenüberliegenden Seite. Durch Ziehen in den Pfeilrichtungen 22 wird der Schlaufenknoten 12 kraftschlüssig verknüpft. Die gewünschte Schlaufe 13 wird aus der Hakenöse 6 ausgehängt. Die Schlaufe 13 ist damit gebrauchs- bzw. einsatzfertig.

Derartige, sorgfältig geknüpfte Knoten 12 erreichen gegenüber den Knoten des Standes der Technik eine höhere Tragkraft. Außerdem ist es mit der neuen Vorrichtung manuell einfach möglich, relativ kleine und zueinander gleichgroße Schlaufen 13 zu binden, wie die Fig. 12 anschaulich zeigt.

Ausgehend von einem Knotenknüpfzustand auf der neuen Vorrichtung, gemäß der Fig. 10, kann, wie aus der Fig. 12 ersichtlich wird, durch einfaches manuelles Ziehen des Doppelfadens 18 die in der Hakenöse 6 eingehängte Schlaufe 13 beliebig, relativ gleichmäßig, verkleinert werden.

Die Fig. 13 bis 15 zeigen eine zweckmäßige Hilfsvorrichtung zur Herstellung der Schlaufe 13 und des zugehörigen Schlaufenknotens 12, inform eines sogenannten Widerlagers 23. Dieses Widerlager 23 dient im wesentlichen dem Zweck, ein einfaches Schlingen der gewünschten Schlaufe 13 zu erzielen. Das Widerlager 23 besteht dabei aus einer Fußplatte 24 mit mindestens einem dazu rechtwinkelig angeordneten einseitigen Zapfen 25, um den eine Schlaufe 13 gelegt wird, wie die Fig. 13 zeigt. Die beiden Finger 15 halten dabei den Doppel-Faden 18. Die neue Vorrichtung wird mittels der Abkröpfung 4 über die beiden parallelen Fäden 18 gelegt.

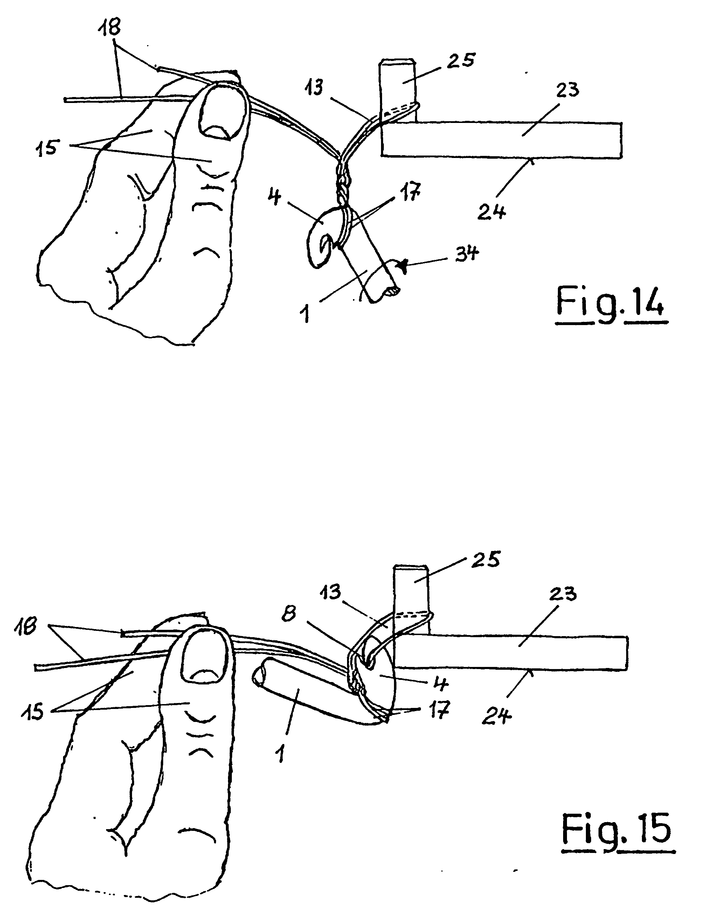

Danach wird in einem nächsten Schritt der Körper 1 der neuen Vorrichtung in Pfeilrichtung 34 um zwei volle Umdrehungen gedreht, wie die Fig. 14 zeigt.

In einem weiteren Schritt wird mittels des Hakebösen-Schnabels 8 die Schlaufe 13 aufgenommen, vom Zapfen 25 abgenommen und durch die Doppelschlaufe 17 gezogen, indem die Abkröpfung 4 am Körper 1 aus der Doppelschlaufe 17 herausgezogen wird. Der gewünschte Schlaufenknoten ist nach dem kraftschlüssigen Zusammenziehen somit fertiggestellt.

Es liegt in Rahmen der Neuerung, daß der stabförmige Körper 1 mit der dort vorgesehenen Abkröpfung 4 auch anders gestaltet sein kann, als dies insbesondere die Fig. 1 bis 5 zeigen. Insbesondere kann die Abkröpfung 4 einen anderen, beispielsweise einen stumpfen, Winkel aufweisen.

In Abänderung des allgemeinen Erfindungsgedankens ist es jedoch auch vorgesehen, daß der Körper 1 mit keiner Abkröpfung 4 versehen ist, sondern daß der Körper 1 einseitig vorderseitig einen ovalen Querschnitt aufweist, und daß in diesem Querschnittsbereich die schlitzförmige Hakenöse 6 in der zur beschriebenen Fig. 3 erwähnten Weise wirksam angeordnet ist.

## Patentansprüche

1. Vorrichtung zur Herstellung von Schlaufenknoten (12), insbesondere unter Verwendung monofiler Angelschnüre (14), **dadurch gekennzeichnet, daß** der stabförmige Körper (1) der Vorrichtung einseitig mit einer hakenförmigen Abkröpfung (4) versehen ist, und daß die Abkröpfung (4) einseitig bzw. endseitig mit einer zur Abkröpfungsinnenseite (5) hin verlaufenden schlitzförmigen Hakenöse (6) versehen ist, die zur Stirnseite (7) hin offen ist.

2. Vorrichtung nach Anspruch 1, **dadurch gekennzeichnet, daß** die Achse der Abkröpfung (4) zur Achse des Körpers (1) in einem spitzen Winkel verlaufend angeordnet ist.

3. Vorrichtung nach Anspruch 1 und 2, **dadurch gekennzeichnet, daß** die Abkröpfung (4) mit einen zur Achse des Körpers (1) ausgerichteten ovalen Querschnitt versehen ist.

4. Vorrichtung nach Anspruch 1 bis 3, **dadurch gekennzeichnet, daß** die Hakenöse (6) zur Abkröpfungsinnenseite (5) hin schlitzförmig offen und einseitig mit einem zum Körper (1) hin weisenden einseitig angeordneten zungenförmigen Haken (10) versehen ist.

5. Vorrichtung nach Anspruch 4, **dadurch gekennzeichnet, daß** der Haken (10) federelastisch ausgebildet, seitensymmetrisch angeordnet ist und auf der Innenseite (26) des Hakenösen-Schnabels (8) federelastisch aufliegt.

6. Vorrichtung nach Anspruch 1 bis 5, **dadurch gekennzeichnet, daß** der Hakenösen-Schnabel (8) zur Abkröpfungsstirnseite (7) hin symmetrisch spitzwinklig bis rechtwinkelig verlaufend ausgebildet und angeordnet ist.

7. Vorrichtung nach Anspruch 1 bis 6, **dadurch gekennzeichnet, daß** der Körper (1) im mittleren stabförmigen Bereich mit einem koaxial verlaufenden vielflächig griffigen Oberflächenbereich (26) versehen ist, daß der Oberflächenbereich (26) einseitig zur Körper-Rückseite (2) hin mit einer koaxialverlaufenden wulstförmigen Körpermantel-Ausbildung (30) versehen ist, die zur Rückseite (2) hin in eine axial verlaufende sich im Außendurchmesser verkleinerte stabförmige Führung (11) mündet.

8. Vorrichtung nach Anspruch 1 bis 7, **dadurch gekennzeichnet, daß** der Körper (1) zusammen mit der Abkröpfung (4) einstückig aus einem Kunststoff hergestellt ist.

## Claims

1. Device for producing loop knots (12), particularly with use of monofilament fishing lines (14), **characterised in that** the rod-shaped body (1) of the device is provided at one end with a hook-shaped angularly bent portion (4) and that the angularly bent portion (4) is provided at one side or at the end with a slot-shaped hook eye (6) which extends towards the inner side (5) of the angularly bent portion and which is open towards the end face (7).

2. Device according to claim 1, **characterised in that** the axis of the angularly bent portion (4) is arranged to extend at an acute angle relative to the axis of the body (1).

3. Device according to claim 1 and 2, **characterised in that** the angularly bent portion (4) is provided with an oval cross-section oriented towards the axis of the body (1).

4. Device according to claim 1 to 3, **characterised in that** the hook eye (6) is open in slot-shape towards the inner side (5) of the angularly bent portion and is provided at one side with a tongue-shaped hook (10) arranged at one side to face towards the body (1).

5. Device according to claim 4, **characterised in that** the hook (10) is constructed to be resiliently elastic, is arranged to be symmetrical with respect to the sides and rests in resiliently elastic manner on the inner side (26) of the hook eye beak (8).

6. Device according to claim 1 to 5, **characterised in that** the hook eye beak (8) is constructed and arranged to extend in an acute-angled to right-angled manner symmetrically towards the end face (7) of the angularly bent portion.

7. Device according to claim 1 to 6, **characterised in that** the body (1) is provided in the centre rod-shaped region with a coaxially extending, multi-surfaced grippable surface region (26) and that the surface region (26) is provided at one side towards the body rear side (2) with a coaxially extending, bead-shaped body circumferential surface formation (30) which towards the rear side (2) opens into an axially extending rod-shaped guide (11) reduced in external diameter.

8. Device according to claim 1 to 7, **characterised in that** the body (1) is produced together with the angularly bent portion (4) integrally from a plastics material.

## Revendications

1. Dispositif pour former une boucle (12), en particulier en utilisant des fils de pêche monofilaments (14), **caractérisé en ce que** le corps en forme de barre (1) du dispositif est pourvu d'un côté d'un coude (4) en forme de crochet, et **en ce que** le coude (4) est pourvu d'un côté ou au bout d'un oeil de crochet (6) en forme de fente qui s'étend vers le côté interne (5) du coude, ledit oeil étant ouvert vers le côté frontal (7).

2. Dispositif selon la revendication 1, **caractérisé en ce que** l'axe du coude (4) est orienté avec un angle aigu est orienté avec un angle aigu par rapport à l'axe du corps (1).

3. Dispositif selon la revendication 1 ou 2, **caractérisé en ce que** le coude (4) présente une section ovale orientée vers l'axe du corps (1).

4. Dispositif selon l'une des revendications 1 à 3, **caractérisé en ce que** l'oeil de crochet (6) est ouvert en forme de fente vers le côté interne (5) du coude et est pourvu d'un côté avec un crochet (10) en forme de languette disposée d'un côté en pointant vers le corps (1).

5. Dispositif selon la revendication 4, **caractérisé en ce que** le crochet (10) est réalisé de manière élastique et est disposé de manière latéralement symétrique et repose de manière élastique sur le côté interne (26) du bec (8) de l'oeil de crochet.

6. Dispositif selon l'une des revendications 1 à 5, **caractérisé en ce que** le bec (8) de l'oeil de crochet est réalisé et disposé en s'étendant avec un angle aigu jusqu'à un angle droit de manière symétrique par rapport au côté frontal (7) du coude.

7. Dispositif selon l'une des revendications 1 à 6, **caractérisé en ce que** le corps (1) est pourvu dans la zone médiane en forme de barre d'une zone de surface supérieure (26) de prise à plusieurs surfaces s'étendant de manière coaxiale, **en ce que** la zone de surface supérieure (26) est pourvue d'un côté d'une enveloppe de corps (30) en forme de bourrelet s'étendant coaxialement d'un côté vers le côté arrière du corps (2), ladite enveloppe (30) se terminant par un manche (11) en forme de barre dont le diamètre externe diminue en s'étendant de manière axiale vers le côté arrière (2).

8. Dispositif selon l'une des revendications 1 à 7, **caractérisé en ce que** le corps (1) est réalisé ensemble avec le coude (4) de manière monobloc en un matériau synthétique.
